# EUROPEAN PATENT SPECIFICATION

(11) **EP 4 030 144 B1**
(45) Date of publication and mention of the grant of the patent: **24.07.2024**
(21) Application number: 21152409.5
(22) Date of filing: 19.01.2021
(51) Int. Cl.: G01D 4/00

(54) **SMART READING DEVICE FOR WATER METER AND CONTROLLING METHOD THEREOF**
INTELLIGENTE LESEVORRICHTUNG FÜR WASSERZÄHLER UND STEUERUNGSVERFAHREN DAFÜR
DISPOSITIF DE LECTURE INTELLIGENT POUR COMPTEUR D'EAU ET SON PROCÉDÉ DE COMMANDE

(43) Date of publication of application: 20.07.2022
(73) Proprietor: ACER BEING COMMUNICATION INC., Taipei City 105 (TW); Acer Incorporated, New Taipei City 221 (TW)
(72) Inventor: Po, Chan-Ping, 105 TAIPEI CITY (TW)
(74) Representative: 2K Patentanwälte Blasberg Kewitz & Reichel

(56) References cited:
- EP-A1- 1 909 073
- WO-A2-2009/043065
- ES-A1- 2 311 363
- US-A1- 2017 364 734
- US-A1- 2018 052 008

## Description

### BACKGROUND

### Technical Field

The disclosure relates to a reading device and a controlling method thereof, and in particular to a smart reading device of a water meter and a controlling method thereof.

### Description of Related Art

With the advancement of technology, various smart home appliances continue to evolve. An example of smart home appliances is a smart water meter, which automatically reads the water consumption so as to facilitate the control and management of water resources, which is helpful for promoting energy saving and carbon reduction.

However, when consumers want to install smart water meters, they need to remove the traditional water meters and even carry out a construction of pipelines. This method requires a relatively high cost, which affects the consumers' willingness to install smart water meters.

In addition, smart water meters need to be certified by relevant agencies to ensure their accuracy. The certification procedure is quite cumbersome, which makes it difficult to promote the application of smart water meters.

Furthermore, the diameters of different water pipes are different, and smart water meters may not be suitable for all homes or places.

Therefore, researchers are committed to developing a smart reading device to equip the traditional water meters with the functions of smart water meters so as to achieve the purpose of water resource control and management.

US 2017/364734 A1 discloses systems and methods for optically reading data from metering equipment by using a camera to record images of a meter, and converting the displayed data measurement regions of the images into alphanumeric data for reporting over a wireless network to a database system for storage, analysis and reporting. One implementation of the device is a water meter reading device integrated into a form factor that replaces the lid of a water meter box. The device captures images of the meter face, converts the images using optical character recognition software into usage data, meter identification and date/time of the data capture and sends the data to a database over a wireless data network.

US 2018/052008 A1 relates to a meter reading device and system. A remote unit includes an electronics assembly, a housing, and a fastening member. The electronics assembly includes a communications module and an image sensor, having a lens with a field of view, that captures images of a display of a meter. The housing includes a cover coupled to a base member. The base member couples to the meter and includes an aperture. The electronics assembly is retained between the base member and the cover, such that the lens aligns with the aperture. The fastening member receives a portion of the housing in a hollow section. A mechanism of the fastening member attaches to a portion of the meter, maintaining the display in the field of view. The communications module transmits image data, derived from the captured images, to a hub unit. The hub unit processes the image data, and forwards information extracted from the image data to a remote server.

EP 1 909 073 A1 discloses a system for remotely reading a meter or equipment fitted with data visual indicators, which is characterized in that it is based on the use of reprogrammable logic devices and the fact that it can be remotely reprogrammed. These two features make the system universal, i.e., suitable for all types of meters, and adjustable to all types of variations in the installation or operation conditions of the meter or the system itself. Methods for reconfiguration, image capture, etc. are defined, having in common that some actions are carried out in parallel, with the use of queues, therefore requiring a small number of (or low-capacity) data storage memory components.

ES 2 311 363 A1 discloses a method and remote meter reading system provided with a visual indicator comprising photographic elements, concentrating elements and reading elements. Each photographic element is coupled to a counter and captures images of the visual indicator of the counter, converting said image into a code and transmitting said code and/or image to another photographic element or to a concentrator element, so that the code and/or image ends up stored in at least one concentrating element. The reading element communicates with the concentrating elements and receives the codes and/or images generally for retransmission to a remote control center. The reading of the counters is simplified by not having the reading element that connect directly to each photographic element but only to a few concentrating elements.

WO 2009 043065 A2 discloses a device and system for verifying and/ or managing services such as electricity, water and gas use remotely. The system includes a service meter or a device attachable to a service meter. The service meter or device includes a means for capturing a digital image of a meter reading and a transmitter for transmitting a signal to a remote station, which signal relates to the digital image of current reading of the meter.

### SUMMARY

The disclosure relates to a smart reading device of a water meter and a controlling method thereof. The smart reading device is adapted to be directly installed onto a traditional water meter, so that consumers can equip the traditional water meter with the functions of the smart water meter without having to remove the original water meter or spend high costs on construction. In this way, the smart reading device may be widespread in various homes and places so as to effectively control and manage water resources.

According to the invention a smart reading device of a water meter is provided. The smart reading device includes a fixing component, a casing, an image capturing component, an image analyzing component, and a transmitting component. The fixing component is used to be fixed onto the water meter. The casing is disposed on the fixing component. The image capturing component is disposed in the casing. The image capturing component is used for capturing a numerical display area of the water meter so as to obtain a water consumption image. The water consumption image is analyzed through the image analyzing component or a relay device to obtain a water consumption value. The transmitting component is used for transmitting the water consumption value or the water consumption image to the relay device. The smart reading device further comprises a recording component disposed in the casing, wherein the recording component is adapted for recording and obtaining a sound signal; and a sound analyzing component determining a water leakage state according to the sound signal.

According to the invention a controlling method of a smart reading device of a water meter is provided. The smart reading device is configured on the water meter. The controlling method of the smart reading device includes the following steps: determining whether a predetermined time is reached; if the predetermined time is reached, capturing a numerical display area of the water meter so as to obtain a water consumption image; analyzing the water consumption image through an image analyzing component or a relay device so as to obtain a water consumption value; and transmitting the water consumption value. The controlling method further comprises the steps: recording and obtaining, through a recording component, a sound signal; and determining a water leakage state, through a sound analyzing component, according to the sound signal.

### BRIEF DESCRIPTION OF THE DRAWINGS

FIG. 1 shows a schematic view of a smart reading device and a water meter according to (but not limited to) an embodiment.
FIG. 2 shows a top view of a base and the water meter of FIG. 1.
FIG. 3 shows an exploded view of the water meter and a casing of FIG. 1.
FIG. 4 shows a rear view of the casing of FIG. 1.
FIG. 5 shows a block diagram of the smart reading device of FIG. 1.
FIG. 6 shows a flow chart of a controlling method of the smart reading device according to (but not limited to) an embodiment.
FIG. 7 shows a schematic view of a smart reading device and a water meter according to (but not limited to) another embodiment.
FIG. 8 shows a cross-sectional view of the smart reading device and the water meter of FIG. 7.
FIGS. 9 to 12 show schematic views of assembly of the smart reading device of FIG. 7.
FIG. 13 shows a block diagram of the smart reading device according to an embodiment.
FIG. 14 shows a block diagram of the smart reading device according to the invention.
FIG. 15 shows a flow chart of detecting a water leakage according to an embodiment.
FIG. 16 shows a flow chart of detecting a water leakage according to an embodiment.

### DESCRIPTION OF THE EMBODIMENTS

Reference is made in detail to the exemplary embodiments of the disclosure as follows, and examples in the exemplary embodiments are illustrated in the accompanying drawings. Whenever applicable, the same reference symbols are used in the drawings and the descriptions to indicate the same or similar parts.

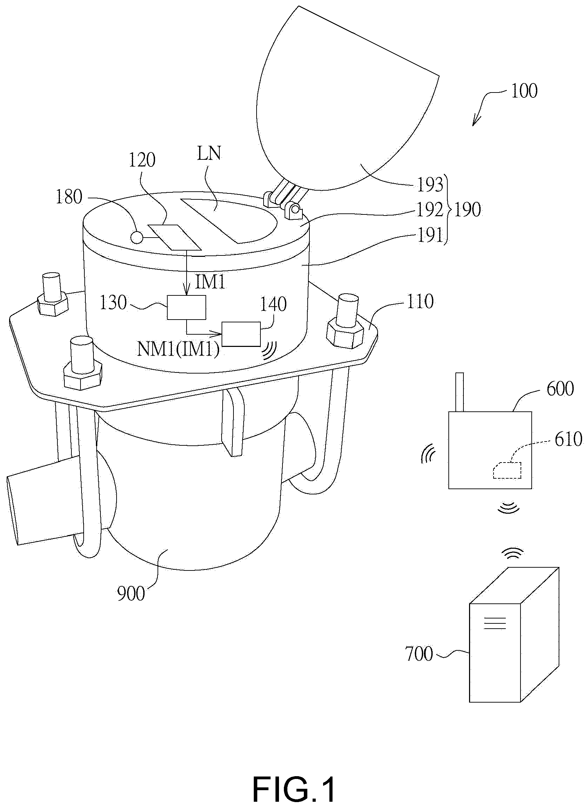

Referring to FIG. 1, FIG. 1 shows a schematic view of a smart reading device 100 and a water meter 900 according to (but not limited to) an embodiment. The smart reading device 100 of this embodiment may be directly installed onto the traditional water meter 900. Consumers can equip the traditional water meter 900 with the functions of a smart water meter without having to replace the original water meter 900 or spend high costs on construction. In this way, the smart reading device 100 may be widespread in various homes and places so as to effectively control and manage water resources.

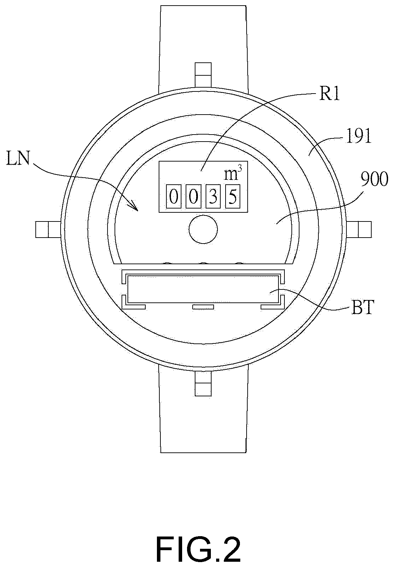

As shown in FIG. 1, the smart reading device 100 includes at least a fixing component 110, a casing 190, an image capturing component 120, a luminous component 180, an image analyzing component 130, and a transmitting component 140. The fixing component 110 is used to be fixed onto the water meter 900. The casing 190 is disposed on the fixing component 110. The image capturing component 120 is disposed in the casing 190. The image capturing component 120 is used for capturing a numerical display area R1 (shown in FIG. 2) of the water meter 900 so as to obtain a water consumption image IM1. The water consumption image IM1 is analyzed through the image analyzing component 130 (or a relay device 600) to obtain a water consumption value NM1. The transmitting component 140 is used for transmitting the water consumption value NM1 (or the water consumption image IM1) to the relay device 600. The relay device 600 then transmits the water consumption value NM1 to a main server 700.

In an embodiment, multiple smart reading devices 100 may be collectively configured near the water tower on the top floor of a building, and the number of the multiple smart reading devices 100 is, for example, more than 30. The multiple smart reading devices 100 transmit data to the nearby relay device 600 (an industrial data acquisition module (IDAM), for example) through Bluetooth technologies. Then, the relay device 600 integrates the data into a packet, for example, and transmits the data to the main server 700 through a 4G-LTE/NB-IOT module. In this way, one only needs to insert a SIM card 610 into the relay device 600, and there is no need to insert the SIM cards 610 into all the smart reading devices 100 and enable each of the smart reading devices 100 to communicate with the main server 700 individually. In this way, the problem of mutual communication interference between the smart reading devices 100 is alleviated. For example, in the LORA standard communication protocol, a device does not detect whether other devices are communicating before the device sends a signal. Therefore, when the number of the water towers on the top floor is higher, the transmission signals between each other are more likely to interfere with each other. Also, in this way, the problem of signal transmission loss may also be alleviated. For example, in the LORA standard communication protocol, once a signal is transmitted, the signal is not retransmitted even if the transmission fails. However, through the design of the relay device 600, the relay device 600 checks whether a signal is successfully transmitted, and if the transmission fails, the signal may be retransmitted. In addition, the relay device 600 may reduce the communication cost, such as the cost of configuring the SIM card 610 in each of the smart reading devices 100, and reduce communication bandwidth requirements.

In addition, as shown in FIG. 1, the casing 190 includes a base 191, a top board 192, and a flip cover 193. The top board 192 is connected to the base 191. The top board 192 has a convex lens LN. The flip cover 193 is connected to the top board 192. When the flip cover 193 is opened, the luminous component 180 is activated, so that users can view the numerical display area R1 (shown in FIG. 2).

The image capturing process of the image capturing component 120 is similar to the process of darkroom photography. The luminous component 180 provides a flash. In one embodiment, the lens of the image capturing component 120 may not have an autofocus function and may have a fixed focal length, so as to reduce the cost of the image capturing component 120. Since the distance between the image capturing component 120 and the water meter 900 is fixed, the need for the autofocus function is quite low.

Referring to FIG. 2, FIG. 2 shows a top view of the base 191 and the water meter 900 of FIG. 1. The smart reading device 100 further includes a battery BT. The battery BT is, for example, a lithium battery. Users can replace the battery BT once they open the top board 192. This design makes it easier to replace the battery BT, so as to reduce the cost of replacement of the battery BT. In an embodiment, the service life of the battery BT is substantially seven or eight years.

In addition, the smart reading device 100 may include a lead seal. The lead seal is used for connecting a lead block with a steel rope to avoid the setting from being adjusted or changed by people of bad intentions, thereby having an anti-theft design. In an embodiment, the smart reading device 100 may have a proactive detecting function, such as a gravity sensor (G-sensor) which detects whether the lead block is moved, or a connecting port which detects whether the lead block is picked up and a disconnection occurs. If an anomaly is detected, the smart reading device 100 may proactively send anomaly information to the main server 700 immediately.

In an embodiment, the height of the casing 190 is 20 cm or less, so that the smart reading device 100 may be installed according to the specification of the water meter 900. For example, if the multiple water meters 900 are configured vertically, when the casing 190 exceeds 20 cm, the top board 192 may not be opened. For example, the top board 192 may collide with the bottom of another water meter. By reasonably limiting the height of the casing 190, both costs and convenience are taken into account.

Furthermore, if the installation process of a smart reading device 100 does not go smoothly, an on-site installer may activate Bluetooth through an application (app), and display the setting values of the smart reading device 100 on a handheld device to facilitate installation operations. In addition, the installer may adjust the setting values through a debug port to obtain or overwrite the setting values. In an embodiment, when the on-site installer approaches a smart reading device 100 with an electronic device, the smart reading device 100 may be automatically connected to the application on the electronic device and display the setting values, for example, through a Bluetooth connection.

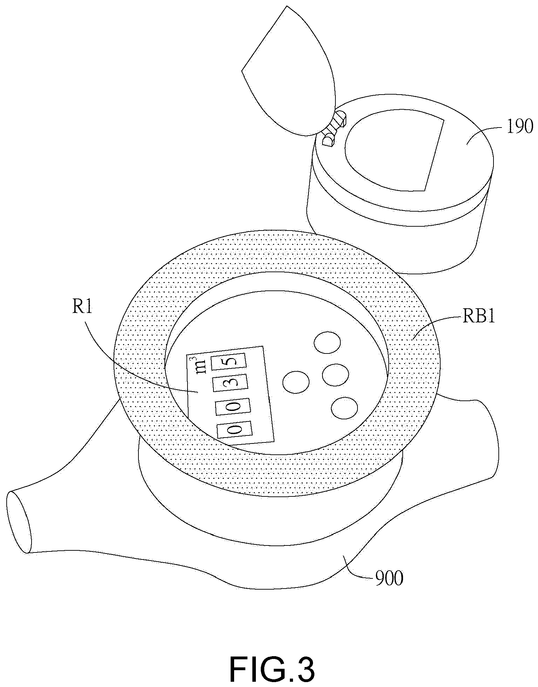

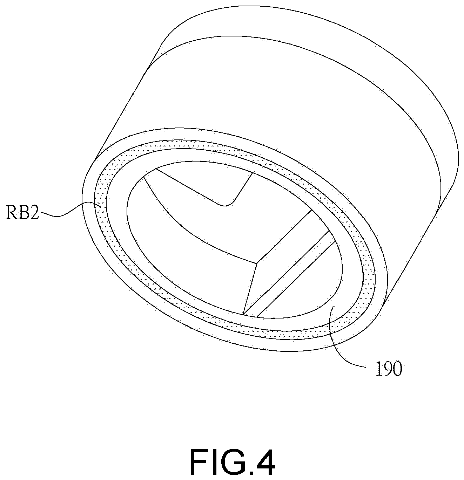

Referring to FIGS. 3 and 4, FIG. 3 shows an exploded view of the water meter 900 and the casing 190 in FIG. 1, and FIG. 4 shows a rear view of the casing 190 in FIG. 1. A rubber gasket RB1 may be configured between the water meter 900 and the casing 190, and a rubber ring RB2 may be configured below the casing 190. In this way, the smart reading device 100 has a waterproof function and the connecting area may be covered so as to prevent water vapor from covering the numerical display area R1, which may cause an erroneous determination.

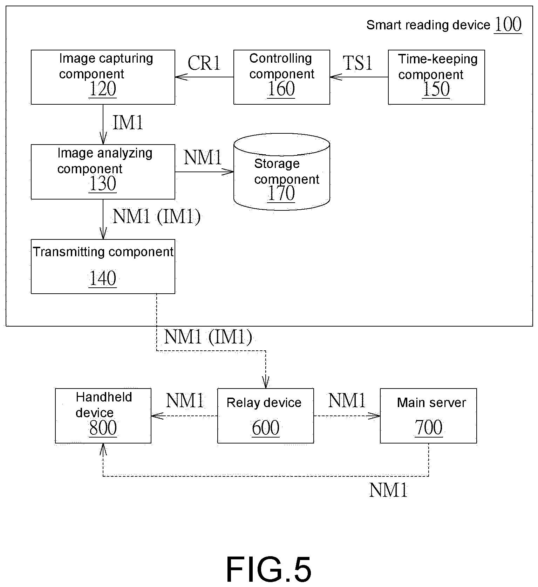

Referring to FIG. 5, FIG. 5 shows a block diagram of the smart reading device 100 in FIG. 1. The smart reading device 100 includes a fixing component 110, an image capturing component 120, an image analyzing component 130, a transmitting component 140, a time-keeping component 150, a controlling component 160, and a storage component 170. The main functions of each of the components are described as follows.

The fixing component 110 is used to be fixed onto the water meter 900. The fixing component 110 is (but is not limited to), for example, a clamping component, a magnetic component, a locking component, an elastic connecting component, various components and structures with a fixing function, etc.

The image capturing component 120 is used for capturing images. The image capturing component 120 is (but is not limited to), for example, a camera, a lens, a digital photosensitive component, various components with an image capturing function, etc.

The image analyzing component 130 is used for executing image analyzing procedures. The image analyzing component 130 is (but not limited to), for example, a chip, a circuit board, a circuit, a firmware, or a storage device which stores multiple sets of codes.

The transmitting component 140 is used for transmitting components. The transmitting component 140 is (but not limited to), for example, a Bluetooth transmission module, a LoRa radio frequency module, a Wifi module, or a transmission line.

The time-keeping component 150 is used for counting time. The time-keeping component 150 is (but not limited to), for example, a chip, a circuit board, a circuit, a firmware, or a storage device which stores multiple sets of codes.

The controlling component 160 is used for controlling the operations of the image capturing component 120 and the transmitting component 140. The controlling component 160 is (but not limited to), for example, a chip, a circuit board, a circuit, a firmware, or a storage device which stores multiple sets of codes.

The storage component 170 is used for storing various kinds of pieces of data. The storage component 170 is (but not limited to), for example, a memory. The following is a detailed description of the operation method of each of the components of the smart reading device 100 with an accompanying flow chart.

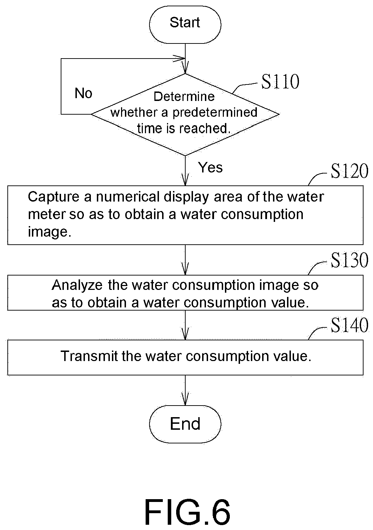

Referring to FIG. 6, FIG. 6 shows a flow chart of a controlling method of the smart reading device 100 according to (but not limited to) an embodiment. The following describes the operation of each step of the flow chart with the block diagram of FIG. 5. First, in a step S110, the controlling component 160 determines whether a predetermined time is reached. The predetermined time is, for example, one month, one week, or one day. As shown in FIG. 6, if the predetermined time is reached, the flow proceeds to a step S120; if the predetermined time is not reached, the flow returns to the step S110. As shown in FIG. 5, the time-keeping component 150 provides a time signal TS1 to the controlling component 160, and the controlling component 160 learns whether the predetermined time is reached according to the time signal TS1. The time signal TS1 is (but not limited to), for example, time accumulation information (such as 502 minutes accumulated, 678 minutes accumulated, etc.), or standard time information (such as 1:00, March 5th, etc.).

Then, in the step S120, the controlling component 160 outputs a controlling signal CR1 to the image capturing component 120, so that the image capturing component 120 captures the numerical display area R1 (shown in FIG. 2) of the water meter 900, so as to obtain a water consumption image IM1. The water consumption image IM1 is (but not limited to), for example, a monochrome image, a color image, or a monochrome grayscale image.

Then, in a step S130, the water consumption image IM1 is analyzed so as to obtain the water consumption value NM1. In the step S130, the water consumption value NM1 is identified through, for example, (but not limited to) an optical character recognition technology. Or in an embodiment, the water consumption value NM1 is identified through, for example, (but not limited to) a deep learning model. In the step S130, the image analyzing component 130 is used for executing this step, or the relay device 600 is used for executing this step.

In an embodiment, when the difference between the water consumption value NM1 analyzed and obtained by the image analyzing component 130 and the previous water consumption value NM1 exceeds a predetermined value, it means that an error exists in the analysis, and the step S120 needs to be re-executed, so as to obtain the water consumption image IM1 and conduct the analysis again. If the water consumption value NM1 obtained by the analysis is less than the previous water consumption value NM1, an error also exists, and the step S120 needs to be re-executed. The predetermined value may be set remotely.

If the step S120 is re-executed five times (five images are captured in one minute, for example) and the water consumption values NM1 obtained by the analyses are all out of range, the water consumption value NM1 is still uploaded.

Then, in a step S140, the relay device 600 transmits the water consumption value NM1 to the main server 700 or the handheld device 800. In an embodiment, the smart reading device 100 may not execute the step of analyzing and obtaining the water consumption value NM1, and may directly transmit the water consumption image IM1 to the main server 700 or the handheld device 800 through the transmitting component 140. This method consumes more power, but the smart reading device 100 may not need to be configured with the image analyzing component 130. Compared with the method of transmitting the water consumption image IM1, the method of analyzing and transmitting the water consumption value NM1 is more power-efficient.

In (but not limited to) an embodiment, the transmitting component 140 may transmit the water consumption value NM1 (or the water consumption image IM1) to the relay device 600 through Bluetooth technologies. Or in (but not limited to) another embodiment, the transmitting component 140 may transmit the water consumption value NM1 (or the water consumption image IM1) to the relay device 600 through LoRa technologies. In an embodiment, when the transmitting component 140 transmits the water consumption value NM1, if the transmission is not successful in the first time, the relay device 600 may repeat the transmission for a predetermined number of times until the transmission is successful.

In another embodiment, the water consumption value NM1 may be stored in the storage component 170 or the relay device 600 of the smart reading device 100. Users may proactively obtain the complete water consumption value NM1 from the storage component 170 or the relay device 600.

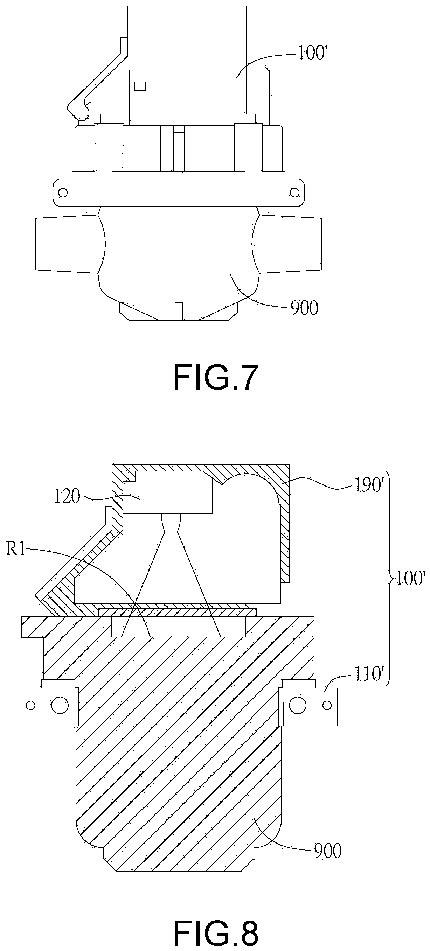

Referring to FIGS. 7 to 8, FIG. 7 shows a schematic view of a smart reading device 100' and the water meter 900 according to (but not limited to) another embodiment, and FIG. 8 shows a cross-sectional view of the smart reading device 100' and the water meter 900 according to FIG. 7. The smart reading device 100' of this embodiment may also be directly installed onto the traditional water meter 900. Consumers can equip the traditional water meter 900 with the functions of a smart water meter without having to replace the original water meter 900 or spend high costs on construction. In this way, the smart reading device 100 may be widespread in various homes and places so as to effectively control and manage water resources.

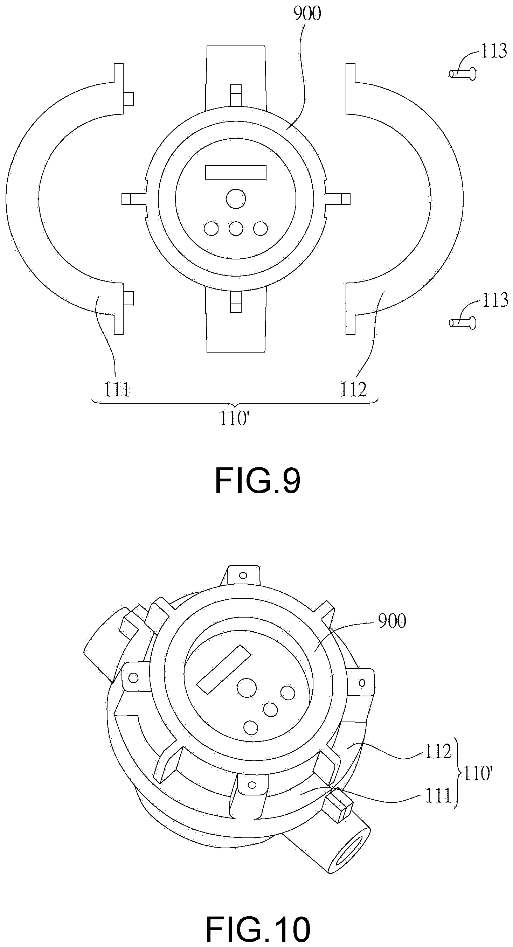

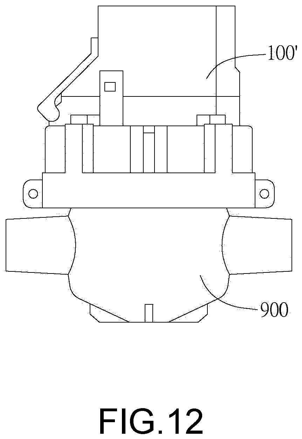

Referring to FIGS. 9 to 12, FIGS. 9 to 12 show schematic views of assembly of the smart reading device 100' of FIG. 7. First, as shown in FIGS. 9 to 10, in an embodiment, a fixing component 110' may be (but not limited to) formed by two semicircular clamping structures 111 and 112. The clamping structure 111 and the clamping structure 112 clamp the water meter 900 from both sides of the water meter 900. Screws 113 are used for locking the clamping structure 111 and the clamping structure 112 onto the water meter 900 so that the clamping structure 111 and the clamping structure 112 are tightly fitted to the water meter 900.

In (but not limited to) another embodiment, the clamping structure 111 and the clamping structure 112 may be magnetic, so as to be directly attached to the outer side wall of the water meter 900.

In (but not limited to) another embodiment, the clamping structure 111 and the clamping structure 112 may be flexible so as to match various water meters of different sizes.

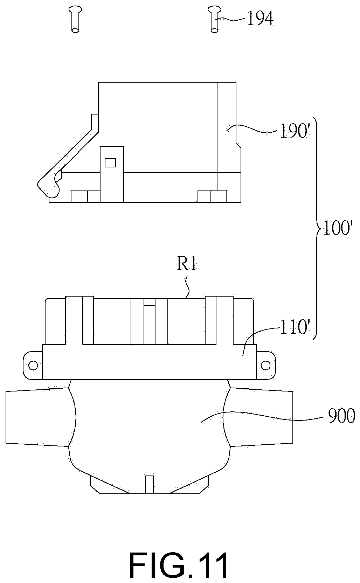

Next, as shown in FIGS. 11 to 12, a casing 190' of the smart reading device 100' is locked to the fixing component 110 from above through the screws 194.

Through the aforementioned assembly method, the water meter 900 does not need to be changed in structure, and users may easily assemble the smart reading device 100' on the water meter 900.

According to the aforementioned description, the smart reading device 100 and the smart reading device 100' of the aforementioned embodiments may be directly installed on the traditional water meter 900. Users can equip the traditional water meter 900 with the functions of a smart water meter without having to remove the original water meter 900 or spend high costs on construction. In this way, the smart reading device 100 and the smart reading device 100' may be widespread in various homes and places so as to effectively control and manage water resources.

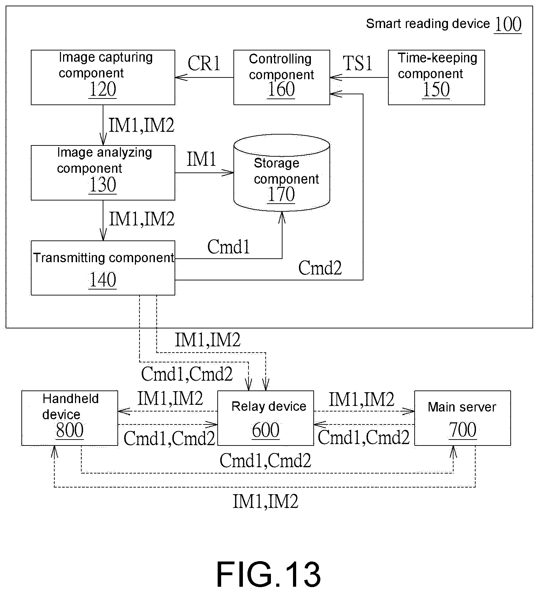

Referring to FIG. 13, FIG. 13 shows a block diagram of the smart reading device according to an embodiment. The smart reading device 100 includes a fixing component 110, an image capturing component 120, an image analyzing component 130, a transmitting component 140, a time-keeping component 150, a controlling component 160, and a storage component 170. The main functions of each of the components are the same as the aforementioned and are omitted herein. In an embodiment, the smart reading device 100 may provide the water consumption image IM1 and a water consumption image IM2 to the handheld device 800, so that users may directly view the water consumption image IM1 and the water consumption image IM2 or save the water consumption image IM1 and the water consumption image IM2 through the handheld device 800. In an embodiment, the smart reading device 100 may provide the water consumption image IM1 captured at a specific time to the handheld device 800, and the water consumption image IM1 is used for obtaining the water consumption value NM1. In an embodiment, the smart reading device 100 may provide the water consumption image IM2 captured at any time to the handheld device 800 according to users' needs. In an embodiment, the handheld device 800 may transmit an image reporting instruction Cmd1 or an image reporting instruction Cmd2 to the transmitting component 140 through the relay device 600. The transmitting component 140 transmits the water consumption image IM1 or the water consumption image IM2 to the handheld device 800 through the relay device 600 in response to receiving the image reporting instruction Cmd1 or the image reporting instruction Cmd2.

Specifically, when the controlling component 160 learns that the predetermined time is reached according to the time signal TS1, the controlling component 160 controls the image capturing component 120 through the controlling signal CR1 to capture the numerical display area R1 of the water meter 900, so as to obtain the water consumption image IM1 captured at a specific time. The storage component 170 may be used for recording the water consumption image IM1 captured at a specific time. When users want to obtain the water consumption image IM1 captured at a specific time, the handheld device 800 may transmit the image reporting instruction Cmd1 to the transmitting component 140 through the relay device 600, so as to notify the smart reading device 100 to transmit back the water consumption image IM1. Therefore, in response to receiving the image reporting instruction Cmd1 from the relay device 600, the transmitting component 140 transmits the water consumption image IM1 stored in the storage component 170 to the handheld device 800 through the relay device 600.

On the other hand, the handheld device 800 may control the smart reading device 100 through the image reporting instruction Cmd2 to instantly execute image capturing actions, so that users may obtain the water consumption image IM2 captured at any time through the handheld device 800. When users want to obtain the water consumption image IM2 at the current time, the handheld device 800 may transmit the image reporting instruction Cmd2 to the transmitting component 140 through the relay device 600, so that the transmitting component 140 receives the image reporting instruction Cmd2 from the relay device 600. The controlling component 160 controls the image capturing component 120 to capture images according to the image reporting instruction Cmd2. In other words, in response to receiving the image reporting instruction Cmd2, the controlling component 160 controls the image capturing component 120 through the controlling signal CR1 to capture the numerical display area R1 of the water meter 900, so as to obtain the water consumption image IM2 captured at the current time. Then, the transmitting component 140 may transmit the water consumption image IM2 captured at the current time to the handheld device 800 through the relay device 600 in response to the image reporting instruction Cmd2.

It is to be noted that, in an embodiment, the handheld device 800 may directly transmit the image reporting instruction Cmd1 and the image reporting instruction Cmd2 to the relay device 600. Or in an embodiment, the handheld device 800 may transmit the image reporting instruction Cmd1 and the image reporting instruction Cmd2 to the main server 700, and then the image reporting instruction Cmd1 and the image reporting instruction Cmd2 may be transmitted to the relay device 600 through the main server 700.

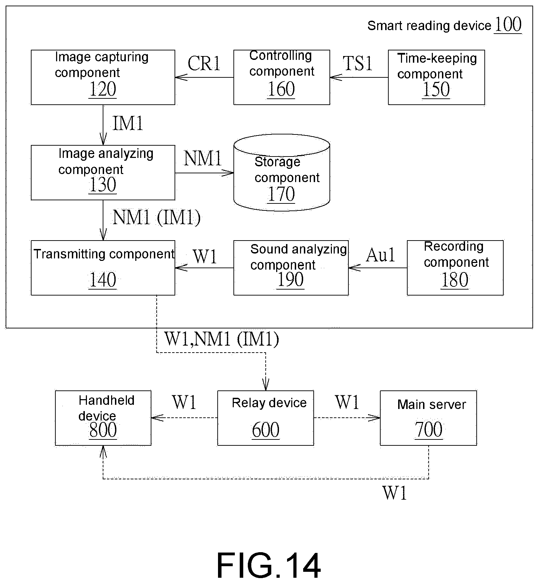

Referring to FIG. 14, FIG. 14 shows a block diagram of the smart reading device according to the invention. In this embodiment, the smart reading device 100 includes a recording component 180 and a sound analyzing device 190 in addition to a fixing component 110, an image capturing component 120, an image analyzing component 130, a transmitting component 140, a time-keeping component 150, a controlling component 160, and a storage component 170.

The recording component 180 is used for recording sounds and may include a microphone. In an embodiment, the aforementioned microphone may be a directional microphone. The directional microphone receives sounds in a specific direction clearly and suppresses environmental noise. The recording component 180 is configured in the casing 190, and the recording component 180 is used for recording and obtaining a sound signal Au1. Specifically, when water flows through the water meter 900, the mechanical components inside the water meter 900 execute relative actions. For example, the water flow drives an impeller inside the water meter 900 to rotate. When the water flow drives the mechanical components inside the water meter 900 to execute the relative actions, the mechanical components inside the water meter 900 make sounds. The recording component 180 is adapted to record the sounds of the water flow and the sounds made by the mechanical components inside the water meter 900.

The sound analyzing device 190 is used for executing a sound analyzing procedure. The sound analyzing device 190 is (but not limited to), for example, a chip, a circuit board, a circuit, a firmware, or a storage device which stores multiple sets of codes. The sound analyzing component 190 is adapted to analyze the sound signal Au1 provided by the recording component 180, and obtain the sound characteristics of the aforementioned sound signal Au1, such as the volume or the audio frequency thereof. In addition, in an embodiment, the sound analyzing device 190 may also execute denoising processing or other audio frequency processing on the sound signal Au1 provided by the recording component 180. In the invention, the sound analyzing component 190 is adapted to determine the water leakage state according to the sound characteristics of the sound signal Au1, and release a water leakage warning message W1 according to the result of the determination. The water leakage warning message W1 may be transmitted to the handheld device 800 through the relay device 600 to notify users.

Specifically, when a water pipe is old and leaks or when users forget to turn off a water outlet device (such as a faucet), even if the users are not using water, the water meter 900 continues to accumulate the water consumption value, which brings unnecessary financial loss and waste of water to the water users. In the invention, the sound analyzing component 190 is adapted to determine the water leakage state according to the sound characteristics of the sound signal Au1, and release the water leakage warning message W1 according to the result of the determination. Therefore, users may instantly know whether an unexpected water usage occurs through the handheld device 800.

In the invention, the sound analyzing component 190 is adapted to determine the water leakage state according to the volume of the sound signal Au1. Normally, when users stop using water, the mechanical components inside the water meter 900 stop acting. When the mechanical components inside the water meter 900 stop acting, the volume of the sound signal Au1 should be less than a threshold value. Therefore, the sound analyzing device 190 may determine whether to release the water leakage warning message W1 by comparing the volume of the sound signal Au1 with the aforementioned threshold value.

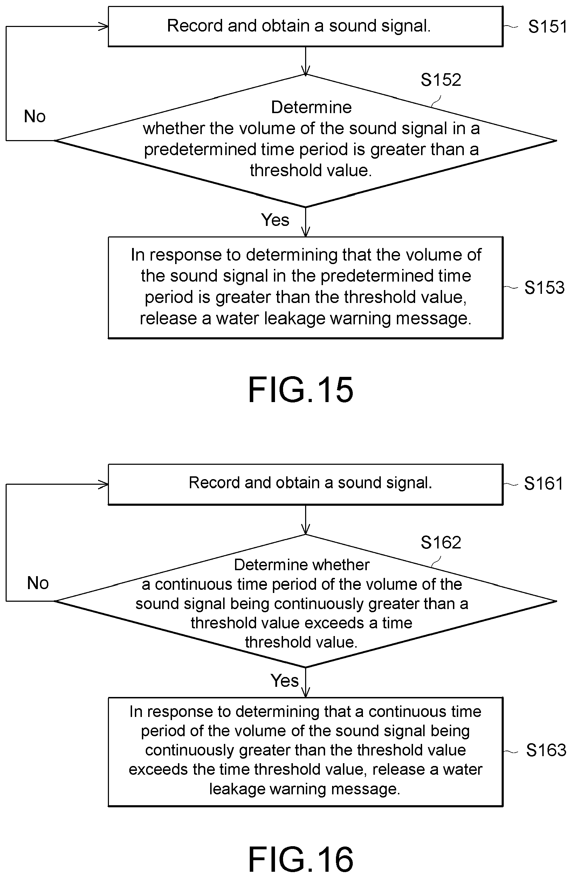

Referring to FIG. 15, FIG. 15 shows a flow chart of detecting a water leakage according to an embodiment. In an embodiment, in a step S151, the recording component 180 records and obtains the sound signal Au1. In a step S152, the sound analyzing device 190 determines whether the volume of the sound signal Au1 in a predetermined time period is greater than the threshold value. The aforementioned predetermined time period may be a time period when water is not used set by users or a time period when water is not used estimated by a specific algorithm. The length of the predetermined time period is not limited. The length of the predetermined time period may be, for example, 2 minutes, 5 minutes, 10 minutes, etc. For example, the time period when water is not used may be a time period when users are not at home or a late-night time period, such as from 3:00 a.m. to 3:05 a.m. During the time period when water is not used, the mechanical components inside the water meter 900 should stop acting so that the volume of the sound signal Au1 is less than the threshold value. When an unexpected water flow passes through the water meter 900, the mechanical components inside the water meter 900 act accordingly so that the volume of the sound signal Au1 is greater than the threshold value. Therefore, if it is determined in the step S152 that the volume of the sound signal Au1 in a predetermined time period is greater than the threshold value, in a step S153, in response to the sound analyzing component 190 determining that the volume of the sound signal Au1 in a predetermined time period is greater than the threshold value, the transmitting component 140 releases a water leakage warning message W1. On the contrary, if it is determined in the step S152 that the volume of the sound signal Au1 in a predetermined time period is not greater than the threshold value, the transmitting component 140 does not release the water leakage warning message W1.

Referring to FIG. 16, FIG. 16 shows a flow chart of detecting a water leakage according to an embodiment. In an embodiment, in a step S161, the recording component 180 records and obtains the sound signal Au1. In a step S162, the sound analyzing device 190 determines whether a continuous time period of the volume of the sound signal Au1 being continuously greater than the threshold value exceeds a time threshold value. Specifically, users using water should be a non-continuous event. In other words, the continuous time period of the mechanical components acting inside the water meter 900 normally does not exceed the time threshold value. The aforementioned time threshold value is, for example, 3 hours, 5 hours, 12 hours, etc., and is not limited thereto. When the continuous time period of the mechanical components acting inside the water meter 900 exceeds the time threshold value, it means that an unexpected water flow passes through the water meter 900. Therefore, if it is determined in the step S162 that a continuous time period of the volume of the sound signal Au1 being continuously greater than the threshold value exceeds the time threshold value, in the step S163, in response to the sound analyzing component 190 determining that the continuous time period of the volume of the sound signal Au1 being continuously greater than the threshold value exceeds the time threshold value, the transmitting component 140 releases the water leakage warning message W1. On the contrary, if it is determined in the step S162 that the continuous time period of the volume of the sound signal Au1 being continuously greater than the threshold value does not exceed the time threshold value, the transmitting component 140 does not release the water leakage warning message W1.

## Claims

1. A smart reading device (100, 100') of a water meter (900), comprising:
a fixing component (110, 110') adapted for being fixed onto the water meter (900);
a casing (190) disposed on the fixing component (110, 110');
an image capturing component (120) disposed in the casing (190), wherein the image capturing component (120) is adapted for capturing a numerical display area (R1) of the water meter (900) so as to obtain a water consumption image (IM1, IM2);
an image analyzing component (130) adapted to analyze the water consumption image (IM1, IM2) to obtain a water consumption value (NM1);
a transmitting component (140) adapted for transmitting the water consumption value (NM1) or the water consumption image (IM1, IM2) to a relay device (600);
**characterized by**:
a recording component (180) disposed in the casing (190), wherein the recording component (180) is adapted for recording and obtaining a sound signal (Au1); and
a sound analyzing component (190) adapted to determine a water leakage state according to the sound signal (Au1).

2. The smart reading device (100, 100') of the water meter (900) according to claim 1, further comprising:
a time-keeping component (150) adapted for providing a time signal (TS1); and
a controlling component (160) controlling the image capturing component (120) to capture images according to the time signal (TS1).

3. The smart reading device (100, 100') of the water meter (900) according to claim 1 or 2, further comprising:
a luminous component (180) adapted for providing a light source for the numerical display area (R1).

4. The smart reading device (100, 100') of the water meter (900) according to claim 3, wherein the casing (190) comprises:
a base (191);
a top board (192) connected to the base (191), wherein the top board (192) has a convex lens (LN); and
a flip cover (193) connected to the top board (192), wherein when the flip cover (193) is opened, the luminous component (180) is activated for a user to view the numerical display area (R1).

5. The smart reading device (100, 100') of the water meter (900) according to one of the preceding claims, wherein the image analyzing component (130) is adapted to identify the water consumption value (NM1) through a deep learning model or an optical character recognition technology.

6. The smart reading device (100, 100') of the water meter (900) according to one of the preceding claims, further comprising:
a storage component (170) adapted for recording the water consumption image (IM1, IM2) captured at a specific time,
wherein the transmitting component (140) is adapted to transmit the water consumption image (IM1, IM2) to a handheld device (800) through the relay device (600) in response to receiving an image reporting instruction (Cmd1, Cmd2) from the relay device (600).

7. The smart reading device (100, 100') of the water meter (900) according to one of the preceding claims, further comprising:
a controlling component (160) adapted to control the image capturing component (120) to capture images according to an image reporting instruction (Cmd1, Cmd2), wherein the transmitting component (140) is adapted to receive the image reporting instruction (Cmd1, Cmd2) from the relay device (600), and adapted to transmit the water consumption image (IM1, IM2) to a handheld device (800) through the relay device (600) in response to the image reporting instruction (Cmd1, Cmd2).

8. The smart reading device (100, 100') of the water meter (900) according to claim 1, wherein in response to the sound analyzing component (190) determining that a volume of the sound signal (Au1) in a predetermined time period is greater than a threshold value, the transmitting component (140) is adapted to release a water leakage warning message (W1).

9. The smart reading device (100, 100') of the water meter according to claim 1 or 8, wherein in response to the sound analyzing component (190) determining that a continuous time period of a volume of the sound signal (Au1) being continuously greater than a threshold value exceeds a time threshold value, the transmitting component (140) is adapted to release a water leakage warning message (W1).

10. A controlling method of a smart reading device (100, 100') of a water meter (900), wherein the smart reading device (100, 100') is installed on the water meter (900), the controlling method comprising:
determining whether a predetermined time is reached;
capturing a numerical display area (R1) of the water meter (900) to obtain a water consumption image (IM1) if the predetermined time is reached;
analyzing the water consumption image (IM1) through an image analyzing component (130) or a relay device (600) so as to obtain a water consumption value (NM1);
transmitting the water consumption value (NM1);
**characterized by**:
recording and obtaining, through a recording component (180), a sound signal (Au1); and
determining a water leakage state, through a sound analyzing component (190), according to the sound signal (Au1).

11. The controlling method of the smart reading device (100, 100') of the water meter (900) according to claim 10, further comprising:
recording the water consumption image (IM1) captured at a specific time;
in response to receiving an image reporting instruction (Cmd1, Cmd2) from the relay device (600), transmitting the water consumption image (IM1) to a handheld device (800) through the relay device (600);
in response to receiving an image reporting instruction (Cmd1, Cmd2) from the relay device (600), capturing a numerical display area (R1) of the water meter (900) so as to obtain another water consumption image (IM2); and
transmitting the another water consumption image (IM2) to a handheld device (800) through the relay device (600).

## Patentansprüche

1. Intelligente Ablesevorrichtung (100, 100') für einen Wasserzähler (900), umfassend:
ein Befestigungsteil (110, 110'), das an dem Wasserzähler (900) befestigt werden kann;
ein Gehäuse (190), das auf dem Befestigungsteil (110, 110') angeordnet ist;
eine Bilderfassungskomponente (120), die in dem Gehäuse (190) angeordnet ist, wobei die Bilderfassungskomponente (120) zum Erfassen eines numerischen Anzeigebereichs (R1) des Wasserzählers (900) geeignet ist, um ein Wasserverbrauchsbild (IM1, IM2) zu erhalten;
eine Bildanalysekomponente (130), die geeignet ist, das Wasserverbrauchsbild (IM1, IM2) zu analysieren, um einen Wasserverbrauchswert (NM1) zu erhalten;
eine Sendekomponente (140), die geeignet ist, den Wasserverbrauchswert (NM1) oder das Wasserverbrauchsbild (IM1, IM2) an eine Relaiseinrichtung (600) zu übertragen;
**gekennzeichnet durch**:
eine Aufzeichnungskomponente (180), die in dem Gehäuse (190) angeordnet ist, wobei die Aufzeichnungskomponente (180) zum Aufzeichnen und Gewinnen eines Tonsignals (Au1) geeignet ist; und
eine schallanalysierende Komponente (190), die geeignet ist, einen Wasserleckagezustand entsprechend dem Schallsignal (Au1) zu bestimmen.

2. Intelligente Auslesevorrichtung (100, 100') für einen Wasserzähler (900) nach Anspruch 1, ferner umfassend:
eine Zeithaltekomponente (150), die ein Zeitsignal (TS1) liefern kann; und
eine Steuerkomponente (160), die die Bilderfassungskomponente (120) steuert, um Bilder gemäß dem Zeitsignal (TS1) zu erfassen.

3. Intelligente Auslesevorrichtung (100, 100') für einen Wasserzähler (900) nach Anspruch 1 oder 2, ferner umfassend:
ein leuchtendes Bauteil (180), das geeignet ist, eine Lichtquelle für den numerischen Anzeigebereich (R1) bereitzustellen.

4. Intelligente Auslesevorrichtung (100, 100') für einen Wasserzähler (900) nach Anspruch 3, wobei das Gehäuse (190) umfasst:
eine Basis (191);
eine obere Platte (192), die mit der Basis (191) verbunden ist, wobei die obere Platte (192) eine konvexe Linse (LN) aufweist; und
eine Klappabdeckung (193), die mit der oberen Platte (192) verbunden ist, wobei, wenn die Klappabdeckung (193) geöffnet wird, die leuchtende Komponente (180) aktiviert wird, damit ein Benutzer den numerischen Anzeigebereich (R1) sehen kann.

5. Intelligente Auslesevorrichtung (100, 100') für einen Wasserzähler (900) nach einem der vorangehenden Ansprüche, wobei die Bildanalysekomponente (130) so beschaffen ist, dass sie den Wasserverbrauchswert (NM1) durch ein Deep-Learning-Modell oder eine optische Zeichenerkennungstechnologie identifiziert.

6. Intelligente Auslesevorrichtung (100, 100') für einen Wasserzähler (900) nach einem der vorhergehenden Ansprüche, ferner umfassend:
eine Speicherkomponente (170), die zur Aufzeichnung des zu einem bestimmten Zeitpunkt aufgenommenen Wasserverbrauchsbildes (IM1, IM2) geeignet ist,
wobei die Übertragungskomponente (140) so ausgelegt ist, dass sie das Wasserverbrauchsbild (IM1, IM2) als Reaktion auf den Empfang eines Bildberichtsbefehls (Cmd1, Cmd2) von der Relaiseinrichtung (600) über die Relaiseinrichtung (600) an ein Handgerät (800) überträgt.

7. Intelligente Auslesevorrichtung (100, 100') für einen Wasserzähler (900) nach einem der vorhergehenden Ansprüche, die ferner Folgendes umfasst:
eine Steuerkomponente (160), die angepasst ist, um die Bilderfassungskomponente (120) zu steuern, um Bilder gemäß einer Bildberichtsanweisung (Cmd1, Cmd2) zu erfassen, wobei die Übertragungskomponente (140) angepasst ist, um die Bildberichtsanweisung (Cmd1, Cmd2) von der Relaisvorrichtung (600) zu empfangen, und angepasst ist, um das Wasserverbrauchsbild (IM1, IM2) über die Relaisvorrichtung (600) als Reaktion auf die Bildberichtsanweisung (Cmd1, Cmd2) an eine Handvorrichtung (800) zu übertragen.

8. Intelligente Auslesevorrichtung (100, 100') für einen Wasserzähler (900) nach Anspruch 1, wobei die Sendekomponente (140) als Reaktion darauf, dass die Geräuschanalysekomponente (190) feststellt, dass die Lautstärke des Geräuschsignals (Au1) in einem vorbestimmten Zeitraum größer als ein Schwellenwert ist, eine Wasserleckwarnmeldung (W1) ausgeben kann.

9. Intelligente Auslesevorrichtung (100, 100') für einen Wasserzähler nach Anspruch 1 oder 8, wobei die Sendekomponente (140) als Reaktion darauf, dass die Geräuschanalysekomponente (190) feststellt, dass eine kontinuierliche Zeitspanne, in der die Lautstärke des Geräuschsignals (Au1) kontinuierlich größer als ein Schwellenwert ist, einen Zeitschwellenwert überschreitet, dazu ausgelegt ist, eine Wasserleckwarnmeldung (W1) auszugeben.

10. Verfahren zur Steuerung einer intelligenten Auslesevorrichtung (100, 100') eines Wasserzählers (900), wobei die intelligente Auslesevorrichtung (100, 100') auf dem Wasserzähler (900) installiert ist, wobei das Steuerungsverfahren umfasst:
Feststellen, ob eine vorgegebene Zeit erreicht ist;
Erfassen eines numerischen Anzeigebereichs (R1) für einen Wasserzähler (900), um ein Wasserverbrauchsbild (IM1) zu erhalten, wenn die vorbestimmte Zeit erreicht ist;
Analysieren des Wasserverbrauchsbildes (IM1) durch eine Bildanalysekomponente (130) oder eine Relaisvorrichtung (600), um einen Wasserverbrauchswert (NM1) zu erhalten;
Übermitteln des Wasserverbrauchswertes (NM1);
**gekennzeichnet durch**:
Aufzeichnen und Gewinnen eines Tonsignals (Au1) durch eine Aufzeichnungskomponente (180); und
Bestimmen eines Wasserleckagezustands durch eine Schallanalysekomponente (190) entsprechend dem Schallsignal (Au1).

11. Verfahren zur Steuerung der intelligenten Auslesevorrichtung (100, 100') für einen Wasserzähler (900) nach Anspruch 10, das ferner Folgendes umfasst:
Aufzeichnen des Wasserverbrauchsbildes (IM1), das zu einem bestimmten Zeitpunkt aufgenommen wurde;
als Reaktion auf den Empfang eines Bildberichtsbefehls (Cmd1, Cmd2) von der Relaisvorrichtung (600), Übertragen das Wasserverbrauchsbild (IM1) über die Relaisvorrichtung (600) an ein Handgerät (800);
als Reaktion auf den Empfang eines Bildberichtsbefehls (Cmd1, Cmd2) von der Relaisvorrichtung (600), Erfassen eines numerischen Anzeigebereichs (R1) des Wasserzählers (900), um ein weiteres Wasserverbrauchsbild (IM2) zu erhalten; und
Übermitteln des anderen Wasserverbrauchsbildes (IM2) an ein tragbares Gerät (800) über die Relaiseinrichtung (600).

## Revendications

1. Dispositif de lecture intelligent (100, 100') pour un compteur d'eau (900), comprenant :_
une pièce de fixation (110, 110') qui peut être fixée au compteur d'eau (900);
un boîtier (190) disposé sur la partie de fixation (110, 110');
un composant de capture d'image (120) disposé dans le boîtier (190), le composant de capture d'image (120) étant adapté pour capturer une zone d'affichage numérique (R1) du compteur d'eau (900) afin d'obtenir une image de consommation d'eau (IM1, IM2) ;;
un composant d'analyse d'image (130) adapté pour analyser l'image de consommation d'eau (IM1, IM2) afin d'obtenir une valeur de consommation d'eau (NM1);
un composant d'émission (140) adapté pour transmettre la valeur de consommation d'eau (NM1) ou l'image de consommation d'eau (IM1, IM2) à un dispositif de relais (600);
**caractérisé par**;
un composant d'enregistrement (180) disposé dans le boîtier (190), le composant d'enregistrement (180) étant adapté pour enregistrer et obtenir un signal sonore (Au1); et
un composant d'analyse sonore (190) adapté pour déterminer un état de fuite d'eau correspondant au signal sonore (Au1).

2. Dispositif de lecture intelligente (100, 100') pour un compteur d'eau (900) selon la revendication 1, comprenant en outre:
un composant de maintien dans le temps (150) capable de fournir un signal de temps (TS1); et
un composant de commande (160) qui commande le composant d'acquisition d'image (120) pour acquérir des images conformément au signal temporel (TS1).

3. Dispositif de lecture intelligente (100, 100') pour un compteur d'eau (900) selon la revendication 1 ou 2, comprenant en outre:
un élément lumineux (180) adapté pour fournir une source de lumière pour la zone d'affichage numérique (R1).

4. Dispositif de lecture intelligente (100, 100') pour un compteur d'eau (900) selon la revendication 3, dans lequel le boîtier (190) comprend:
une base (191);
une plaque supérieure (192) reliée à la base (191), la plaque supérieure (192) comprenant une lentille convexe (LN); et
un couvercle rabattable (193) relié à la plaque supérieure (192), dans lequel, lorsque le couvercle rabattable (193) est ouvert, le composant lumineux (180) est activé pour permettre à un utilisateur de voir la zone d'affichage numérique (R1).

5. Dispositif de lecture intelligente (100, 100') pour un compteur d'eau (900) selon l'une quelconque des revendications précédentes, dans lequel le composant d'analyse d'image (130) est adapté pour identifier la valeur de consommation d'eau (NM1) par un modèle d'apprentissage profond ou une technologie de reconnaissance optique de caractères.

6. Dispositif de lecture intelligente (100, 100') pour un compteur d'eau (900) selon l'une quelconque des revendications précédentes, comprenant en outre:
un composant de mémoire (170) adapté pour enregistrer l'image de consommation d'eau (IM1, IM2) prise à un moment donné,
dans lequel le composant de transmission (140) est adapté pour transmettre l'image de consommation d'eau (IM1, IM2) à un combiné (800) via le dispositif de relais (600) en réponse à la réception d'une commande de rapport d'image (Cmd1, Cmd2) provenant du dispositif de relais (600).

7. Dispositif de lecture intelligente (100, 100') pour un compteur d'eau (900) selon l'une quelconque des revendications précédentes, comprenant en outre:
un composant de commande (160) adapté pour commander le composant d'acquisition d'image (120) afin d'acquérir des images selon une instruction de rapport d'image (Cmd1, Cmd2), le composant de transmission (140) étant adapté pour transmettre l'instruction de rapport d'image (Cmd1, Cmd2) à partir du dispositif de relais (600) et est adapté pour transmettre l'image de consommation d'eau (IM1, IM2) à un dispositif manuel (800) via le dispositif de relais (600) en réponse à l'instruction de rapport d'image (Cmd1, Cmd2).

8. Dispositif de lecture intelligente (100, 100') pour un compteur d'eau (900) selon la revendication 1, dans lequel le composant d'émission (140) est apte à émettre un message d'alerte de fuite d'eau (W1) en réponse au fait que le composant d'analyse de bruit (190) détecte que l'intensité sonore du signal de bruit (Au1) est supérieure à une valeur seuil pendant une période de temps prédéterminée.

9. Dispositif de lecture intelligente (100, 100') pour un compteur d'eau selon la revendication 1 ou 8, dans lequel le composant d'émission (140) est adapté pour émettre un message d'alerte de fuite d'eau (W1) en réponse au fait que le composant d'analyse de bruit (190) détecte qu'une période continue pendant laquelle l'intensité sonore du signal de bruit (Au1) est continuellement supérieure à une valeur de seuil dépasse une valeur de seuil de temps.

10. Procédé de commande d'un dispositif de lecture intelligent (100, 100') d'un compteur d'eau (900), le dispositif de lecture intelligent (100, 100') étant installé sur le compteur d'eau (900), le procédé de commande comprenant;
Déterminer si un temps prédéfini a été atteint;
l'acquisition d'une plage d'affichage numérique (R1) pour un compteur d'eau (900) afin d'obtenir une image de consommation d'eau (IM1) lorsque le temps prédéterminé est atteint;
analyser l'image de consommation d'eau (IM1) par un composant d'analyse d'image (130) ou un dispositif de relais (600) afin d'obtenir une valeur de consommation d'eau (NM1)-;
Transmettre la valeur de la consommation d'eau (NM1);;
**caractérisé par**;
l'enregistrement et l'obtention d'un signal sonore (Au1) par un composant d'enregistrement (180) ;; et
la détermination d'une condition de fuite d'eau par un composant d'analyse acoustique (190) correspondant au signal acoustique (Au1).

11. Procédé de commande du dispositif de lecture intelligent (100, 100') pour un compteur d'eau (900) selon la revendication 10, comprenant en outre ce qui suit:
Enregistrer l'image de la consommation d'eau (IM1) prise à un moment donné ;;
en réponse à la réception d'une commande de rapport d'image (Cmd1, Cmd2) provenant du dispositif de relais (600), transmettre l'image de consommation d'eau (IM1) à un appareil portatif (800) par l'intermédiaire du dispositif de relais (600) ;,
en réponse à la réception d'une commande de rapport d'image (Cmd1, Cmd2) provenant du dispositif de relais (600), l'acquisition d'une zone d'affichage numérique (R1) du compteur d'eau (900) afin d'obtenir une autre image de consommation d'eau (IM2); et
transmettre l'autre image de consommation d'eau (IM2) à un appareil portable (800) par l'intermédiaire du dispositif de relais (600).
